# EUROPEAN PATENT APPLICATION

(11) **EP 4 697 776 A1**
(43) Date of publication of application: **18.02.2026**
(21) Application number: 25193843.7
(22) Date of filing: 04.08.2025
(51) Int. Cl.: H04W 12/084, H04L 9/40, H04L 67/63

(54) **DYNAMIC ACCESS TOKEN GENERATION FOR VISITOR CONSUMERS WITHIN A 5G NETWORK**

(30) Priority: 12.08.2024 US 202418800730
(71) Applicant: Oracle International Corporation, Redwood City, CA 94065 (US)
(72) Inventor: MOHAN RAJ, JOHN, REDWOOD CITY, 94065 (US); PALIWAL, GAURAV, REDWOOD CITY, 94065 (US); GOEL, YESH, REDWOOD CITY, 94065 (US)
(74) Representative: D Young & Co LLP

(57) **Abstract**

Various embodiments of the present technology generally relate to systems and methods for providing an access token engine for dynamically generating access tokens for visiting consumers within a 5G network. **In** an example, an access token engine, which may be part of a first network, may receive a service request from a visitor consumer network function (NF) that is part of a second network. The access token engine may determine that the service request lacks an access token for receiving services from the first network and retrieve an access token for the visitor consumer NF based on the service request. The access token engine may then generate an updated service request including the service request and the access token. The updated service request may be transmitted to a producer NF within the first network for furnishing the service request for the visitor consumer NF based on the access token.

## Description

### TECHNICAL FIELD

Various embodiments of the present technology generally relate to network function communication within 5G networks. More specifically, embodiments of the present technology relate to systems and methods for providing an access token engine for dynamically generating access tokens for visiting consumers within a 5G network.

### BACKGROUND

Roaming within 5G networks enables seamless connectivity for client devices as they travel from their home network to a visitor network, ensuring uninterrupted access to mobile services. This advanced capability allows users to maintain high-speed data transmission, low latency, and reliable network performance even when they move across different geographic regions or network boundaries. By leveraging enhanced technologies and protocols, 5G roaming supports a wide range of applications, from everyday smartphone use to critical IoT deployments, thereby providing a consistent and superior user experience regardless of location.

When a client device visits a new network, it often requires an access token, such as an Open Authorization (OAuth) token, to authenticate and receive services. This token acts as a secure credential that verifies the user's identity and permissions with the new network. The visitor network (e.g., the home network to the roaming device) typically issues the token, which the new network validates before granting access to its services. This process ensures that only authorized devices can connect and utilize network resources, maintaining security and privacy. By using standardized tokens, 5G networks can efficiently manage user authentication and authorization across different network operators, facilitating seamless and secure roaming experiences.

In some cases, a service request from a visiting client device may not include the required access token due to differing network procedures, network disruptions, or user authentication issues. Without this token, the new network cannot verify the device's identity and permissions, resulting in a denial of service. While security protocols are essential to protect against unauthorized access and potential security threats, this stringent approach can also have negative consequences. Denying service to legitimate users can lead to poor user experience, frustration, and decreased satisfaction. It may also hinder the adoption and perceived reliability of 5G roaming services.

The information provided in this section is presented as background information and serves only to assist in any understanding of the present disclosure. No determination has been made and no assertion is made as to whether any of the above might be applicable as prior art with regard to the present disclosure.

### OVERVIEW

Particular aspects are set out in the appended independent claims. Various optional embodiments are set out in the dependent claims.

At least some described examples may provide improved systems and techniques for dynamic access token generation for roaming client devices. In particular, at least some described examples may provide an access token engine which can request an access token within a visited network on behalf of the visiting client device. As will be described in greater detail below, the access token engine described herein balances security measures with user accessibility to ensure seamless and satisfactory service delivery while maintaining network integrity.

Technology is disclosed herein for systems and techniques for providing an access token engine that dynamically determines access tokens for visitor networks lacking necessary tokens to request services within a 5G environment. As will be described in greater detail below, an access token engine may be part of or in operational communication with a Security Edge Protection Proxy (SEPP) of a home network. As such, when a service request is received from a visitor network, such as from a visitor consumer network function (NF) within the visitor network, the access token engine may determine that the service request lacks an access token for receiving services from the home network.

Responsive to determining that the service request lacks an access token for receiving services within the home network, the access token engine may determine an access token for the visitor consumer NF. As will be described in greater detail below, this may include retrieving the access token for the visitor consumer NF based on attributes of the service request from another NF within the home network, such as a Network function Repository Function (NRF). In other cases, the access token engine may determine a current access token that was previously generated for the visitor consumer NF based on the attributes of the service request.

Once the access token is determined for the visitor consumer NF, the access token engine may generate an updated request that includes the service request and the access token. The access token engine may then provide the updated request to a producer NF within the home network for furnishing the service request. Responsive to receiving the updated request, the producer NF may validate the updated request and furnish the requested services.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

The accompanying drawings, which are incorporated into and constitute a part of this specification, illustrate one or more certain aspects and, together with the description of the example, serve to explain the principles and implementations of the certain examples.
Figure 1 illustrates an example operational environment for a 5G network in which one or more features of an access token engine can be implemented, according to an embodiment herein;
Figure 2 illustrates an example operational flow of a visitor network requesting services from a home network, according to an embodiment herein;
Figure 3 illustrates an operational environment 300 in which an access token engine provides access tokens for visitor networks, according to an embodiment herein;
Figure 4 provides an example access token engine process, according to an embodiment herein;
Figure 5 illustrates an example operational flow for providing an access token engine, according to an embodiment herein;
Figure 6 illustrates another example operational flow for providing an access token engine, according to an embodiment herein; and
Figure 7 shows an example computing device suitable for providing an access token engine and its related functions, according to an embodiment herein.

Some components or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

The utilization of 5G networks is rapidly becoming ubiquitous and indispensable in modern society. With its promise of ultra-fast speeds, low latency, and massive connectivity, 5G technology is transforming the way we communicate, work, and live. From streaming highdefinition content on mobile devices to powering autonomous vehicles and smart cities, the potential applications of 5G are virtually limitless. Businesses are leveraging 5G networks to enable remote work, enhance productivity, and drive innovation across various industries. Additionally, the proliferation of Internet of Things (IoT) devices, coupled with 5G's capacity to support a massive number of connected devices, is fueling the growth of smart homes, healthcare systems, and industrial automation. As 5G networks continue to expand and evolve, they are increasingly relied upon to deliver seamless connectivity and enable the next wave of technological advancements, shaping the future of society in profound ways.

Roaming, the ability for client devices to move between networks without impacting service, is an increasingly vital feature of 5G. This seamless connectivity ensures that users experience consistent high-speed data, low latency, and uninterrupted service regardless of their geographic location. The sophisticated infrastructure of 5G supports advanced roaming capabilities, allowing devices to transition smoothly between different network operators and regions. This is particularly beneficial for international travelers, remote workers, and IoT applications that require constant connectivity. Enhanced roaming capabilities also enable innovative services such as real-time language translation and global telemedicine, further underscoring the importance of ubiquitous, reliable network access in our interconnected world.

To maintain security and seamless connectivity between a visiting client device and a new, visited network, access tokens, such as Open Authorization (OAuth) tokens, may be utilized. Access tokens serve as digital credentials that authenticate and authorize client devices as they move between different networks. Issued by a visitor network, access tokens are validated by the new network visited by the roaming device to verify the device's identity and permissions. In other words, access tokens enable visiting devices to maintain consistent access to services and resources without compromising security. By leveraging standardized access tokens, 5G networks can efficiently manage authentication and authorization across various network operators, facilitating a smooth and secure roaming experience for users worldwide.

While access tokens like OAuth are commonly used to manage authentication and authorization in 5G roaming, some networks may not utilize them, opting instead for different procedures or protocols. These alternative methods can include SIM-based authentication, mutual agreements between network operators, or proprietary security measures tailored to specific network infrastructures. Networks may choose these alternatives due to legacy systems, regional regulations, or unique operational requirements. However, this diversity in authentication approaches can lead to compatibility issues, complicating the roaming process for users. In particular, these diverse approaches may cause visiting client devices to request services without access tokens required of the visited network.

When a visiting client device requests services from a network without the required access token, several negative consequences can arise. The visited network's inability to authenticate the device can result in a denial of service, leaving the user without connectivity and access to essential resources. This disruption can lead to frustration and decreased user satisfaction, especially if the device is in a critical situation or needs immediate access. Additionally, the lack of proper authorization can compromise network security, potentially exposing vulnerabilities or leading to unauthorized access attempts. These issues not only affect individual users but can also impact the overall reputation and reliability of the network, highlighting the importance of robust and consistent authentication mechanisms in maintaining a smooth roaming experience

To address at least these issues, an example access token engine and its related functions are provided herein. As will be described in greater detail below, an access token engine may function within a home network on behalf of a visiting client device to provide an access token for the visiting service request. A network into which the access token engine retrieves an access token on behalf of a visiting client device may be referred to herein as a home network, while the network from which the visiting client device is originally registered and authenticated is referred to has the visitor network.

When a visiting client device travels into the home network and request services, the home network may receive a service request from the visitor network. For example, a visitor consumer network function (NF) within the visitor network may transmit the service request to a Security Edge Protection Proxy (SEPP) within the home network, sometimes by way of a SEPP within the visitor network. The SEPP and/or the access control engine may determine that the security request lacks an access token required for the home network to service the request. In some cases, the access token engine may be hosted and executed as part of the SEPP while in other cases, the access token engine may be hosted or otherwise executed as part of another network function within the home network.

Responsive to determining that the service request lacks the necessary access token to receive service within the home network, the access token engine may determine an access token on behalf of the visitor network (e.g., on behalf of the visitor consumer NF). As will be described in greater detail below, the access token engine may generate an access token request for the visitor network based on the service request. For example, the access token engine may generate a unique identifier for the visitor consumer NF based on attributes of the service request. These attributes may include a nfinstanceID, an nftype, a targetnftype, the scope of the request, a requesterPLMN, and/or the like, and may be used to generate the access token request.

Once generated, the access token engine may transmit the access token request to a network function within the home network, such as the Network function Repository Function (NRF) to retrieve a respective access token. Responsive to receiving the access token request, the NRF may generate or otherwise provide the requested access token to the access token engine. In turn, the access token engine may generate an updated service requested that includes the access token and provide it to a respective producer NF within the home network. Since the updated service request includes the required access token, the producer NF may validate the access token and furnish the service request. As such, the producer NF may generate and send a successful response, which may include the requested services to the visitor network.

By providing access tokens and validating service request from visiting client devices, the access token engines provided herein offer several significant benefits over current approaches. Firstly, the access token engines enhance user experience by enabling seamless connectivity as clients move across geographic regions or network boundaries, regardless of whether clients' include the necessary access tokens, thereby ensuring uninterrupted service and consistent performance. By generating unique identifiers based on the service request, the access token engine allows for validation processes to be performed by the home network, thereby maintaining security at the home network's edge. Additionally, the access token engine supports efficient network resource utilization by allowing operators to manage and balance traffic loads dynamically, optimizing network performance and reducing congestion. Overall, by allowing home networks the ability to validate and permit roaming access across 5G networks regardless of the inclusion of access tokens, the access token engines contribute to a more flexible, secure, and user-centric mobile communication ecosystem.

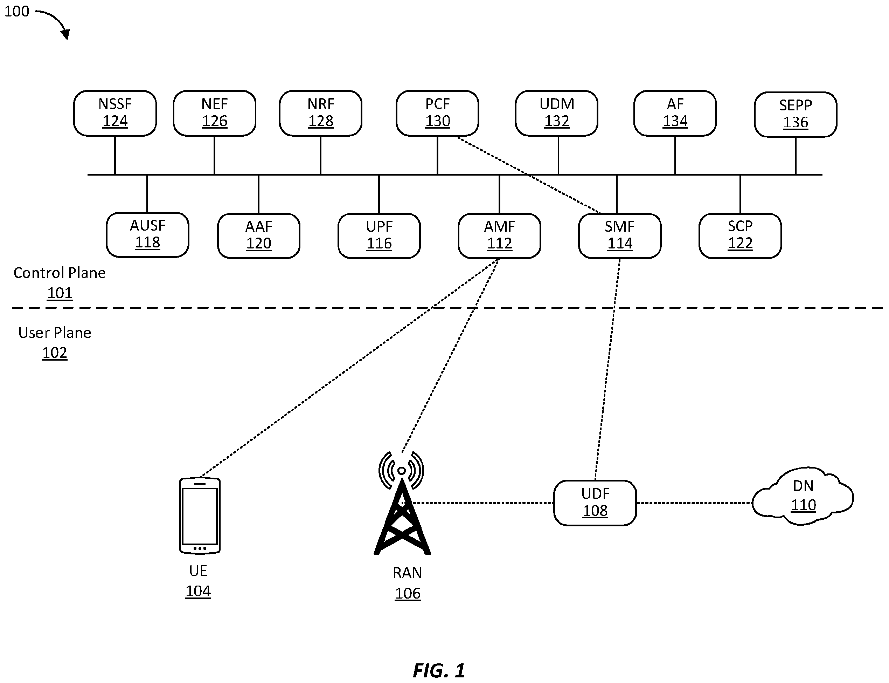

Turning now to the Figures, **Figure 1** illustrates an example operational environment for a 5G network 100 in which one or more features of an access token engine can be implemented, according to an embodiment herein. The example 5G network 100 is a 5G core (5GC) cellular network implementing 3GPP (3rd Generation Partnership Project) communication standards, although the present disclosure may apply to other communication networks.

The 5G network 100, its components, and their sub-components may be implemented via computers, servers, hardware and software modules, or other system components. The components of the 5G network 100 and its subcomponents, or the physical devices implementing them, may be co-located, remotely distributed, or any combination thereof. The elements of 5G network 100 may include components hosted or situated in the cloud and implemented as software modules potentially distributed across one or more server devices or other physical components.

The 5G network 100 is divided into two fundamental planes: a control plane 101 and a user plane 102, each serving distinct yet interdependent roles. The control plane 101 is responsible for managing the signaling and control information necessary to establish, modify, and terminate communication sessions. The control plane 101 handles tasks such as authentication, policy enforcement, and mobility management. As such, the control plane 101 is crucial for orchestrating and controlling the NFs, ensuring efficient and secure connectivity. On the other hand, the user plane 102 deals with the actual data transmission- the movement of user data between devices and applications. It is optimized for high-throughput, low-latency data delivery, and is designed to efficiently transport user traffic. The separation of the control plane 101 and user plane 102 in the 5G network 100 enhances scalability, flexibility, and enables network slicing, allowing tailored configurations to meet diverse service requirements. Together, these planes 101 and 102 form a cohesive architecture that empowers the 5G network 100 to deliver unprecedented speed, reliability, and versatility for a wide array of applications and services.

As noted above, the user plane 102 of the 5G network 100 operates in tandem with the control plane 101 to deliver efficient and seamless data transmission. For example, as illustrated, when a User Equipment (UE) 104, which could be a smartphone or any other device, initiates a communication the user plane 102 handles the actual user data traffic. When the UE 104 initiates communication, the Radio Access Network (RAN) 106 comes into play, managing the wireless connection between the UE 104 and the network 100, in particular the UE 104 and the Access and Mobility Management Function (AMF) 112. The RAN 106 acts as the bridge between the user plane 102 and the control plane 101, facilitating the establishment of communication sessions. As data travels through the RAN 106, it encounters the User Data Function (UDF) 108, which plays a pivotal role in processing and optimizing user data. The UDF 108 is responsible for tasks such as traffic optimization, content caching, and data transformation, enhancing the efficiency of data delivery.

The UDF 108 provides the data to the Data Network (DN) 110, which could represent the broader internet or a specific network service. The DN 110 processes and delivers the user data to its intended destination, completing the journey initiated by the UE 104. The collaborative operation of the user plane 102, UE 104, RAN 106, UDF 108, and DN 110 ensures that data is transmitted reliably and efficiently, meeting the high-performance expectations of 5G networks. As those skilled in the art readily appreciate, the separation of user plane 102 and control plane 101 allows for flexible network configurations and optimizations, contributing to the enhanced capabilities of the 5G ecosystem.

As noted above, when the UE 104 initiates a communication within the 5G network 100, the AMF 112 coordinates the interaction. For example, when the UE 104 initiates communication or moves within the 5G network 100, it sends signaling messages to the AMF 112. The AMF 112 is responsible for tasks such as authentication, authorization, and mobility management. Upon receiving the signaling messages from the UE 104, the AMF 112 validates the user's identity, checks for necessary permissions, and establishes the necessary context for the session. The AMF 112 coordinates with other network functions, such as the Session Management Function (SMF) 114 and the User Plane Function (UPF) 116, to ensure the seamless setup and management of communication sessions. The interaction with the control plane 101 enables the UE 104 to access network services, adhere to established policies, and maintain continuous connectivity while benefiting from the advanced capabilities and optimizations offered by the 5G network architecture.

The control plane 101 includes example components, nodes, or NFs. As illustrated, the control plane 101 includes the AMF 112, the SMF 114, the UPF 116, an Authentication Server Function (AUSF) 118, an Authentication and Authorization Function (AAF) 120, Service Communications Proxy (SCP) 122, a Network Slice Selection Function (NSSF) 124, Network Exposure Function (NEF) 126, a Network Repository Function or NF Repository Function (NRF) 128, a Packet Core Function (PCF) 130, a Unified Data Management (UDM) 132, an Application Function (AF) 134, and a Security Edge Protection Proxy (SEPP) 136. The selection of NFs 112-136 depicted in the 5G network 100 is by way of example only, and some of the NFs 112-136 may be excluded, or other NFs added to the collection, without departing from the scope of this disclosure. The various NFs 112-136 execute various operations to provide communication services to UEs, such as the UE 104, that connects to the 5G network 100. A network node or NF that provides service is referred to herein as a NF producer, while a network node or NF that consumes services is referred herein to as a NF consumer. A network function can be both a NF producer and a NF consumer depending on whether it is consuming or providing service.

The NFs 112-136 of the 5G network 100 exchange various communications in the course of providing network services. The communications may include messaging to establish or end secured communication channels, such as transport layer security (TLS) handshakes, as well as service-based interface (SBI) communications. As used herein, SBI is the term given to the application programming interface (API) based communication that can take place between two NFs within the 5G SBA. A given NF can utilize an API call over the SBI to invoke a particular service or service operation. Communications between NFs 112-136 may be performed over network links and communication channels of the 5G network 100 that are not explicitly depicted in Figure 1.

When the UE 104 initiates communication within the 5G network 100, various network functions often operate in pairs, where one NF acts as the producer ("the NF producer"), generating or providing specific services or information, and the other NF acts as the consumer (the "NF consumer"), utilizing or consuming the produced services or information to complete service requests. For instance, consider the interaction between the SMF 114 and the Packet Core Function (PCF) 130. The SMF 114, as the NF consumer, initiates service requests related to session establishment, modification, or termination for UE sessions, such as for the UE 104. The SMF 114 communicates these requests to the PCF 130, acting as the NF producer, which performs functions related to session management, Quality of Service (QoS) enforcement, and access control. The PCF 130 processes the requests from the SMF 114, enforces QoS policies, manages session establishment and modification, and ensures appropriate access control based on network policies and conditions. Through this producer-consumer interaction, the SMF 114 and PCF 130 collaborate to deliver efficient and reliable service within the 5G network architecture.

As those skilled in the art readily appreciate, various NFs may act as NF producers and NF consumers. For example, a NF producer may be or include the PCF 130, the SMF 114, a unified data repository (UDR) (not shown), a charging function (CHF), Binding Support Function (BSF) (not shown) or a Network Data Analytic Function (NWDAF) (not shown). depending on the operation and the service request. A NF consumer may be or include the UE 104, a service capability function (SCF) (not shown), the SCP 122, the SMF 114, the AMF 112, the NEF 126, a security edge protection proxy (SEPP) 136, the AF 134, the UDR, or a charging function (CHF), depending on the operation and the service request.

As noted above, the 5G network 100 includes the SEPP 136. The SEPP 136 plays a crucial role in enhancing the security framework of the 5G network 100. For example, the SEPP 136 may act as a gateway between the 5G core network 100 and external networks, such as a visitor network, or service providers, thereby ensuring that all data exchanges are secure and compliant with the latest security protocols. It protects against unauthorized access and potential threats by encrypting and decrypting signaling messages, thereby safeguarding the integrity and confidentiality of communications. By monitoring and filtering traffic at the network edge, the SEPP 136 also helps in detecting and mitigating various cyber threats, ensuring robust protection for the 5G network's 100 expansive and dynamic infrastructure.

The SEPP 136 also plays an integral role in the security architecture of the 5G network 100 by interacting with other network functions to validate access tokens, such as OAuth tokens, for roaming or visitor devices. When a visitor device roams into a new network, such as the 5G network 100, the SEPP 136 forwards the service request to the AAF 120 or similar network function responsible for token validation. The AAF 120 verifies the legitimacy and validity of the token, checking for factors like expiration and scope of access. Once the token is authenticated, the AAF 120 communicates the result back to the SEPP 136, which then ensures that only authorized devices gain access to the 5G network's 100 services. This collaborative process helps maintain stringent security standards and enables secure, seamless connectivity for roaming devices within the 5G network 100.

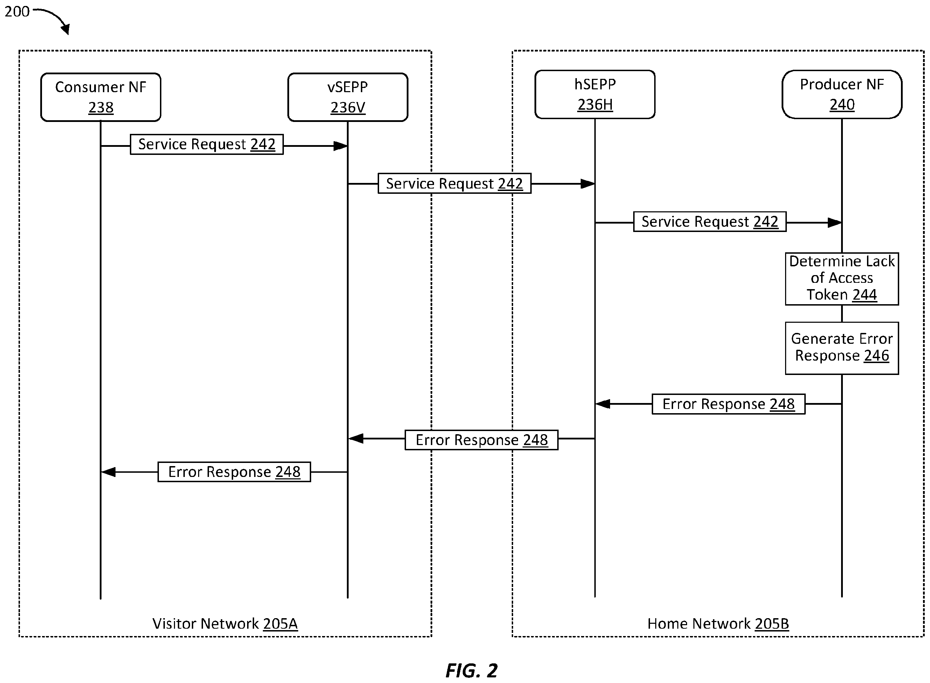

Referring now to **Figure 2****,** an example operational flow 200 of a visitor network 205A requesting services from a home network 205B is illustrated, according to an embodiment herein. Specifically, the operational flow 200 illustrates a visitor network 205A including a visitor consumer NF 238 and a visitor SEPP (vSEPP) 236V. The consumer NF may be or include any of the components described with respect to the 5G network 100. For example, the visitor consumer NF 238 may be an AMF, such as the AMF 112, an SMF, such as the SMF 114, or the like.

In the illustrated example, a client device associated with the visitor network 205A may roam into the home network 205B. As such, the visitor network 205A may initiate a service request 242 on behalf of the roaming device. For example, the visitor consumer NF 238 may provide the service request 242 to the vSepp 236B which may, in turn, transmit the service request 242 to the home SEPP (hSEPP) 236H. Upon receiving the service request 242, the hSEPP 236H may pass the service request 242 to producer NF 240 within the home network 205B. The producer NF 240, which may be an AAF, such as the AAF 120, may check the service request 242 for the presence of an access token, such as an OAuth token. Here, the producer NF 240 may determine 244 that the service request 242 lacks the access token necessary to receive services from the home network 205B. As such, the producer NF 240 may generate 246 an error response 248. The error response 248 may deny the service request 242. Once generated, the home network 205B may transmit the error response 248 to the visitor network 205A.

The service request 242 from the visitor network 205A may not contain an access token when a device roams into the home network 205B due to a variety of reasons, such as differing protocols or procedures. For example, the visitor network 205A might adhere to a distinct authentication framework or security standards that do not involve access tokens, or it may use an alternative method for managing user credentials and access permissions. As a result, when a visitor device from the visitor network 205A attempts to access services in the home network 205B, it might not present an access token, which is a requirement for the home network's 205B authentication and authorization process. This misalignment in protocols may cause the visitor device to be denied services by the home network 205B, thereby negatively affecting client experiences.

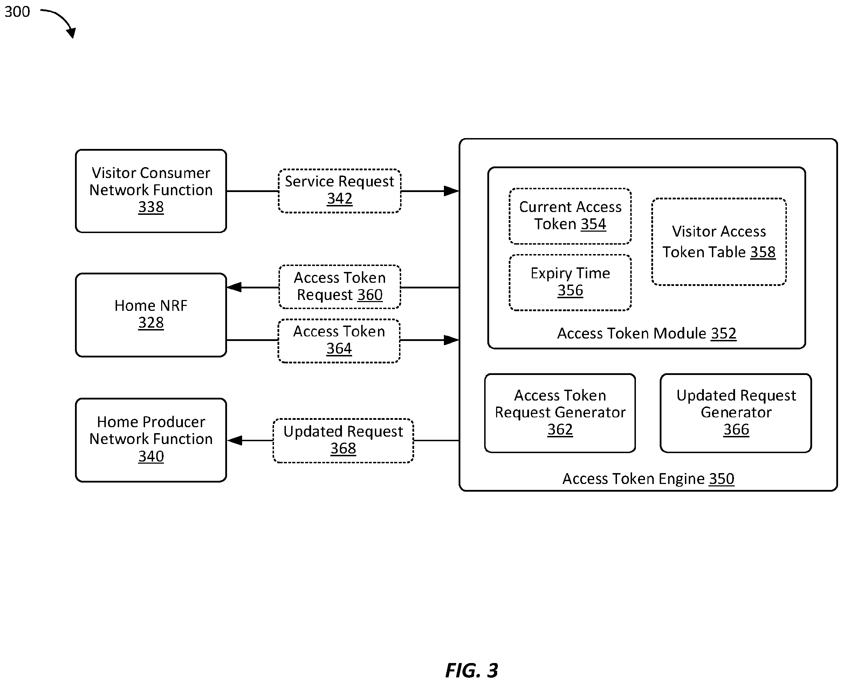

To address situations where a visitor device lacks an access token within a home network, such as the home network 205B, an example access token engine is provided herein. Referring now to **Figure 3****,** an operational environment 300 is illustrated in which an access token engine 350 provides access tokens for visitor networks, according to an embodiment herein. As shown, the access token engine 350 may be in operational communication with a visitor consumer NF 338, which may be the same or similar to the visitor consumer NF 238, and a home producer NF 340 which may be the same or similar to the home producer NF 240.

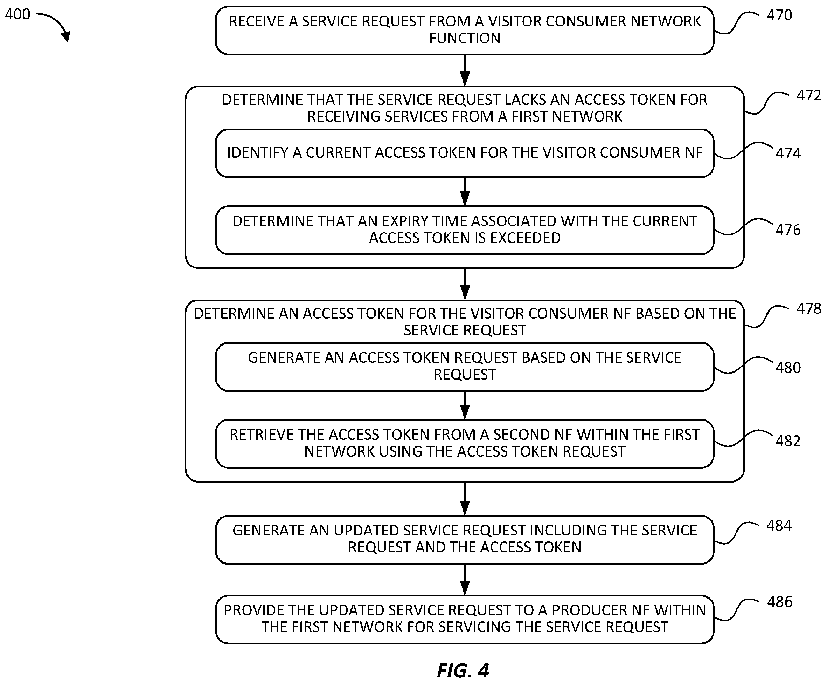

For ease of explanation, Figure 3 is described in conjunction with **Figure 4****,** which provides an example access token engine process, in particular a process 400 for providing the access token engine 350 and one or more of its functions, according to an embodiment herein. In other words, Figure 4 illustrates the process 400 for dynamically determining an access token for a visitor consumer NF, according to an embodiment herein. While Figure 4 is described with relation to Figure 3, it should be appreciated that components, elements, and steps from any other Figures described herein may be equally applicable.

As shown in Figure 3, the access token engine 350 may receive a service request 342 from the visitor consumer NF 338 (470). In some embodiments, the access token engine 350 may be part of or in operational communication with a home network's hSEPP, such as part of the hSEPP 236H within the home network 205B. As such, when the hSEPP receives the service request 342, the service request 342 may also be routed to the access token engine 350. Responsive to receiving the service request 342, the access token engine 350 may determine whether the service request 342 includes an access token necessary to receive services from the home network.

Access tokens typically include information about the requesting NF (e.g., visitor consumer NF 338) or visitor network to ensure secure and authorized access within the home network. As such, access tokens often include the identity of the requesting entity, such as its unique identifier or network address, as well as details about its role or permissions within the network. In some embodiments, the access token may be an Open Authorization (OAuth) token that includes the visitor device's identity, scope of access, and the token's validity period. By embedding this contextual information within the access token, the home network can effectively validate and authorize requests, ensuring that only authorized NFs or visitor networks can access specific resources or services. As those skilled in the art readily appreciate, access tokens allow home network's to maintain robust security and control over interactions with visitor networks, facilitating seamless and secure communication across different components and domains.

In the illustrated example, the access token engine 350 may determine that the service request 342 lacks an access token needed to receive the requested services within the home network (472). For example, the access token engine 350 may include an access token module 352 that determines whether the service request 342 includes a valid access token or any access tokens at all. That is, in some embodiments, the service request 342 may not include any access token, while in other embodiments, the service request 342 may include a current access token 354 that is no longer valid. As will be described in greater detail below, the access token module 352 may identify a current access token 354 for the visitor consumer NF 338 (474) and based on the current access token 354, determine that an expiry time 356 associated with the current access token 354 is exceeded (476). As such, the current access token 354 may no longer be valid.

Once the access token engine 350 determines that the service request 342 lacks the access token required to receive services from the home network, the access token engine 350 may determine the access token for the visitor consumer NF 338 based on the service request 342 (478). That is, the access token engine 350 may generate or retrieve the appropriate access token for the visitor consumer NF 338 so that the service request 342 can be serviced by the home network. To determine the access token for the visitor consumer NF 338, the access token engine 350 may include an access token request generator 362. The access token request generator 362 may generate an access token request 360 based on the service request 342 (480). Specifically, the access token request generator 362 may parse the service request 342 to generate a unique identifier for the visitor consumer NF 338 and/or various attributes required to receive an access token.

As noted above, access tokens typically include the identity of the requesting entity, such as its unique identifier or network address, as well as details about its role or permissions within the home network. However, since the service request 342 is provided from a visitor network and does not include an access token, identification, role, and permissions information is likely not provided as part of the service request 342. As such, the access token request generator 362 may parse the service request 342 to generate unique identifiers for the visitor consumer NF 338, as well as other attributes for the service request 342 that can be used for an access token. For example, the access token request generator 362 may parse the service request 342 for the following attributes to be used to request an access token:
*nfinstanceID*: this attribute may be set to the nfinstance of the visitor consumer NF 338, however, if the visitor consumer NF 338 nfinstance is not available, then this attribute may be set to the nfInstance of the hSEPP;
*nftype*: this attribute may be inferred based on the service request 342, such as from the User-Agent header (if present in the service request 342 it will contain the nftype);
*targetnftype*: this attribute may be inferred from the service request 342;
*scope of service*: this attribute may be inferred from the service request 342; and/or
*requesterPLMN*: this attribute may be inferred from either the 3gpp-sbi-Originating-Network-id or from the vSEPP Remote SEPP sets.

From one or more of the above, the access token request generator 362 may generate a unique identifier for the visitor consumer NF 338 as well as any additional information (e.g., role, permission, scope of service) required by the home network for an access token. It should be appreciated that the above attributes are not meant to be a comprehensive list of attributes that can be parsed from the service request 342. In some embodiments, other attributes parsed from the service request 342, and in some cases, the transmitting visitor network, may be used to generate the unique identifier and/or the information required for the access token for the visitor consumer NF 338.

Once the access token request 360 is generated by the access token request generator 362, the access token engine 350 may retrieve an access token 364 from a respective network function within the home network using the access token request 360 (482). For example, the access token engine 350 may provide the access token request 360 to a home NRF 328. The home NRF 328 may be the same or similar to the NRF 128 and be responsible for generating and/or distributing access tokens within the home network. As those skilled in the art readily appreciate, the home NRF 328 plays a pivotal role in managing network functions and ensuring efficient communication and service delivery. One of the home NRF's 328 responsibilities includes generating access tokens to facilitate secure interactions between network entities. When an access token is requested, the home NRF 328 generates the respective access token by incorporating suitably relevant information such as the requesting entity's identity, the scope of access, and the expiry time 356 (e.g., duration for which the token is valid) for the access token. In some cases, the token generation process may include cryptographic techniques to ensure the access token's integrity and security.

Once generated by the respective NF, here the home NRF 328, the access token 364 may be provided back to the hSEPP, specifically to the access token engine 350. Upon receiving the access token 364, the access token engine 350 may store the access token 364 in a visitor access token table 358 along with the respective attributes and/or unique identifier generated for the visitor consumer NF 338. For example, the access token module 352 may store the identified attributes (e.g., nftype, targetnftype, scope of service, nfinstance) of the service request 342 as associated with the access token 364 within the visitor access token table 358.

The access token module 352 may also store the respective expiry time 356 of the access token 364 in the visitor access token table 358 as associated with the access token 364. As noted above, in some scenarios, the service request 342 may include or be associated with a current access token 354. For example, based on the unique identifier and/or attributes present in the service request 342, the access token module 352 may perform a look-up in the visitor access token table 358 to determine whether an access token has been previously associated with the visitor consumer NF 338. If the access token module 352 determines that an access token has been previously generated and associated with the visitor consumer NF 338, the access token module 352 may identify the current access token 354. Based on the expiry time 356 associated with the current access token 354, the access token module 352 may determine whether the current access token 354 is valid or not. If the expiry time 356 is exceeded, the access token engine 350 may generate a subsequent access token request 360 to request a new, valid access token 364 for the visitor consumer NF 338. However, if the current access token 354 is still valid (e.g., the expiry time 356 is not met or exceeded), then the access token engine 350 may use the current access token 354 to request the services outlined in the service request 342.

Once a valid access token, whether it be a current access token 354 that is not expired or the access token 364 retrieved from the home NRF 328, the access token engine 350 may generate an updated request 368 for the services outlined in the service request 342 (484). That is, the access token engine 350 may include an updated request generator 366 that generates the updated request 368. The updated request 368 may include the service request 342 and the access token 364 (or current access token 354 if valid). Once generated, the access token engine 350 may then provide the updated request 368 to a home producer NF 340 for furnishing the service request 342 (486). If the service request 342 is otherwise valid (e.g., contains appropriate content for the requested service), then the home producer NF 340 may service the request based on the valid access token. In some embodiments, the home producer NF 340 may be or include an UDM, such as the UDM 132, a PCF, such as the PCF 130, an UDR, an AUSF, such as the AUSF 118, and the like.

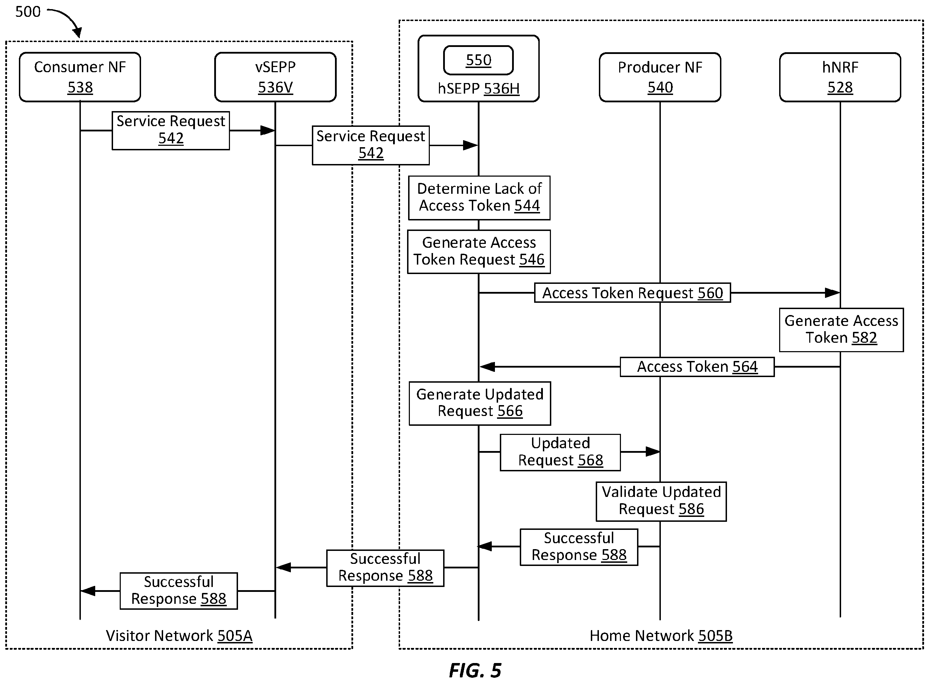

Referring now to **Figure 5****,** an example operational flow 500 for providing an access token engine 550 is illustrated, according to an embodiment herein. The access token engine 550 may be the same or similar to the access token engine 350, and as such may dynamically generate/retrieve access tokens for visiting devices that lack the necessary tokens for receiving services within the requested network. As illustrated, the operational flow 500 is illustrated between a visitor network 505A and a home network 505B, which may be the same or similar to the visitor network 205A and the home network 205B, respectively. As such, the visitor network 505A may include a visitor consumer NF 538 and a visitor SEPP (vSEPP) 536V, which may be the same or similar to the visitor consumer NF 238 and the vSEPP 236V, respectively.

The visitor consumer NF 538 may correspond to a client device that is requesting services within the home network 505B. As such, the consumer NF 538 may submit a service request 542 to the home network 505B, such as via the vSEPP 536V. The vSEPP 536V may transmit the service request 542 to a hSEPP 536H of the home network 505B. As illustrated, the hSEPP 536H may include an access token engine 550. As such, responsive to receiving the service request 542, the access token engine 550 may determine that the service request 542 lacks an access token for the requested services (544). As described above, the access token engine 550 may determine the lack of access token by determining that there is not a valid access token for the visitor consumer NF 538. For example, based on the attributes of the service request 542, the access token engine 550 may perform a look-up within a visitor access token table, such as the table 358, and determine that either there is no previously generated access token or if there is a current access token for the visitor consumer NF 538, that the current access token is invalid based on the expiry time of the token.

Based on the lack of an access token for the visitor consumer NF 538, the access token engine 550 may generate an access token request (456), such as generating an access token request 560. The access token request 560, which may be the same or similar to the access token request 360, may be transmitted to a home NRF (hNRF) 528, which may be the same or similar to the home NRF 328. Responsive to receiving the access token request 560, the hNRF 528 may generate an access token 564 (582). Along with the access token 564, the hNRF 528 may also generate a respective expiry time for the access token 564. The expiry time may specify a time duration during which the access token 564 is valid. Once the expiry time is met or exceeded, the access token 564 may no longer be valid and as such may not allow for services within the home network 505B beyond the expiry time. As those skilled in the art appreciate, the expiry time may range from a few minutes, a few hours, to a few days, depending on the application and services requested.

The access token 564 may be provided back to the hSEPP 536H and/or the access token engine 550, which may in turn, generate an updated request 568 (566) based on the access token 564 and the service request 542. The updated request 568, which may include both the access token 564 and the service request 542, may be provided to a producer NF 540 within the home network 505B, which may be the same or similar to the producer NF 240 and/or 340. The producer NF 540 may validate the updated request 568 (586) and thus generate a successful response 588. The successful response 588 may include a notification that the requested services of the service request 542 may be serviced by the home network 505B and/or the successful response 588 may include the requested services. As illustrated, the successful response 588 may be provided to the visitor consumer NF 538 via the hSEPP 536H and the vSEPP 536V.

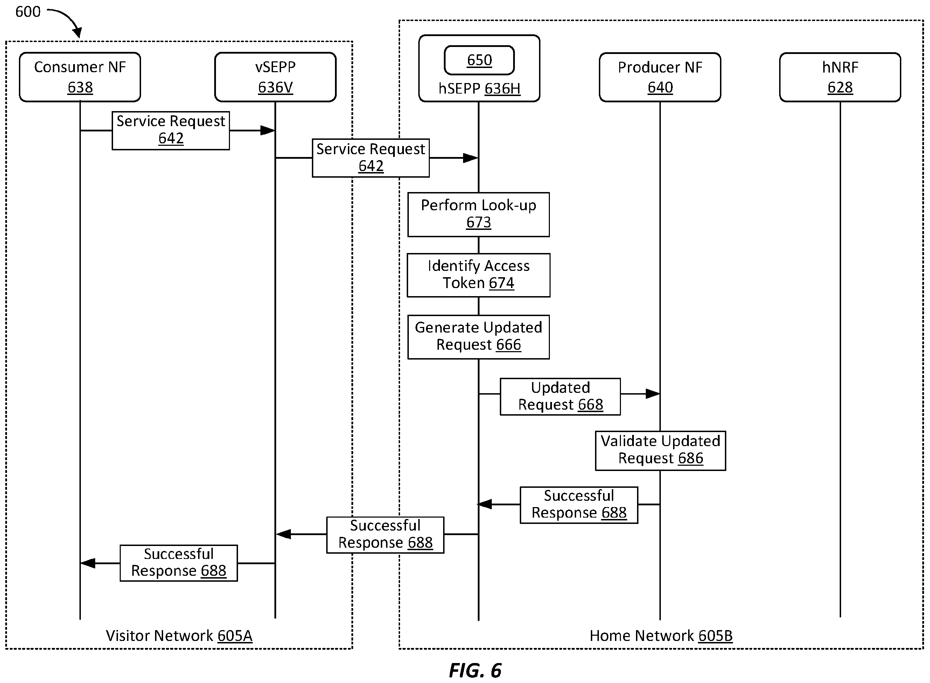

Referring now to **Figure 6****,** another example operational flow 600 for providing an access token engine 650 is illustrated, according to an embodiment herein. The access token engine 650 may be the same or similar to the access token engine 350 and/or 550, and as such may dynamically generate/retrieve access tokens for visiting devices that lack the necessary tokens for receiving services within the requested network. Similar to the operational flow 500, a visitor consumer NF 538 may correspond to a client device that is requesting services within a home network 605B, which may be the same or similar to the home network 505B. As such, the visitor consumer NF 638 may submit a service request 642 to the home network 605B, such as via a vSEPP 636V from a visitor network 605A, which may be the same or similar to the visitor network 505A.

The vSEPP 636V may transmit the service request 642 to a hSEPP 636H of the home network 605B, which may be the same or similar to the hSEPP 536H. As illustrated, the hSEPP 636H may include or be in operational communication with the access token engine 650. As such, responsive to receiving the service request 642, the access token engine 650 may determine whether there is a valid access token for the visitor consumer NF 638. As shown, this determination may include performing a look-up (673) on a visitor access token table, such as the table 357. For example, the access token engine 650 may determine a unique identifier for the visitor consumer NF 638 based on the service request 642, such as from the attributes of the service request 642 and search the visitor access token table using the unique identity. Based on the look-up, the access token engine 650 may identify a current access token (674) associated with the visitor consumer NF 638. In some cases, the access token engine 650 may also determine that the current access token is valid based on the expiry time associated with the current access token.

Responsive to identifying the current access token, the access token engine 650 may generate an updated request 668 (666). Once generated, the access token engine 650, via the hSEPP 636H may transmit the updated request 668 to a producer NF 640, which may be the same or similar to the producer NF 540. Similar to flow 500, responsive to receiving the updated request 668, the producer NF 640 may validate the updated request 568 (686) and thus generate a successful response 688. The successful response 688 may include a notification that the requested services of the service request 642 may be serviced by the home network 605B and/or may include the requested services. As illustrated, the successful response 688 may be provided to the visitor consumer NF 638 via the hSEPP 636H and the vSEPP 636V.

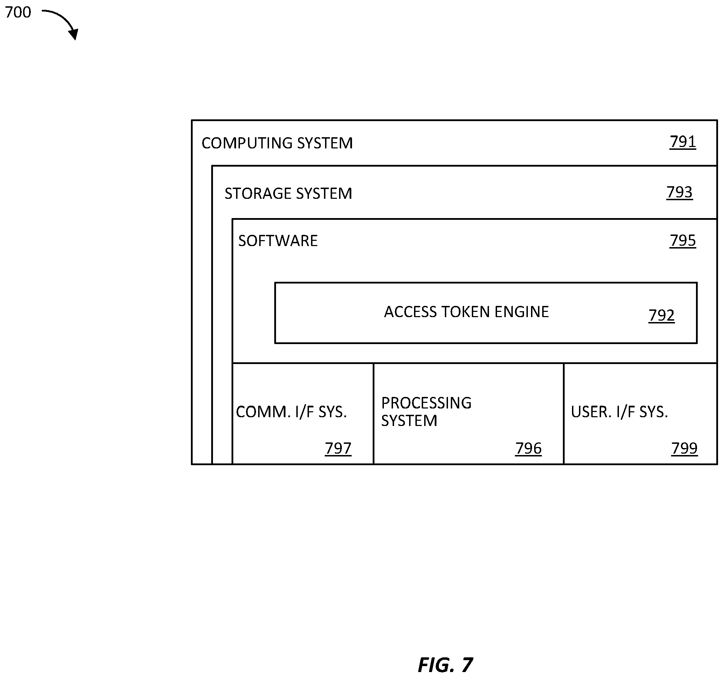

Referring now to **Figure 7****,** is a diagram of a system 700 configured to implement an access token engine, according to an embodiment herein. The system 700 may be an example of an apparatus including a computing apparatus 791 that is representative of any system or collection of systems in which the various processes, systems, programs, services, and scenarios disclosed herein may be implemented. For example, computing apparatus 791 may be an example access token engine, such as the access token engine 350/550/650, a producer NF or consumer NF, such as any of the visitor consumer NFs or home producer NFs discussed herein, a SEPP, such as the vSEPPs and hSEPPS discussed herein, or any of the subcomponents depicted in the 5G network, 100, operational flows 200, 500 or 600, or the operational environment 300 of Figures 1-6, respectively. Examples of computing apparatus 791 include, but are not limited to, server computers, desktop computers, laptop computers, routers, switches, web servers, cloud computing platforms, and data center equipment, as well as any other type of physical or virtual server machine, physical or virtual router, container, and any variation or combination thereof.

Computing apparatus 791 may be implemented as a single apparatus, system, or device or may be implemented in a distributed manner as multiple apparatuses, systems, or devices. Computing apparatus 791 may include, but is not limited to, processing system 796, storage system 793, software 795, communication interface system 797, and user interface system 799. Processing system 796 may be operatively coupled with storage system 793, communication interface system 797, and user interface system 799.

Processing system 796 may load and execute software 795 from storage system 793. Software 795 may include an access token engine 792, which may be representative of any of the operations for providing an access token engine or any of its related functions, as discussed with respect to the preceding figures. When executed by processing system 796, software 795 may direct processing system 796 to operate as described herein for at least the various processes, such as the process 400 or any of the operational flows 500-600, operational scenarios, and sequences discussed in the foregoing implementations. Computing apparatus 791 may optionally include additional devices, features, or functionality not discussed for purposes of brevity.

In some embodiments, processing system 796 may comprise a micro-processor and other circuitry that retrieves and executes software 795 from storage system 793. Processing system 796 may be implemented within a single processing device but may also be distributed across multiple processing devices or sub-systems that cooperate in executing program instructions. Examples of processing system 796 may include general purpose central processing units, graphical processing units, application specific processors, and logic devices, as well as any other type of processing device, combinations, or variations thereof.

Storage system 793 may comprise any memory device or computer-readable storage medium readable by processing system 796 and capable of storing software 795. Storage system 793 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer-readable storage medium a propagated signal.

In addition to computer-readable storage medium, in some implementations storage system 793 may also include computer readable communication media over which at least some of software 795 may be communicated internally or externally. Storage system 793 may be implemented as a single storage device but may also be implemented across multiple storage devices or sub-systems co-located or distributed relative to each other. Storage system 793 may comprise additional elements, such as a controller, capable of communicating with processing system 796 or possibly other systems.

Software 795 (including the access token engine 792 among other functions) may be implemented in program instructions that may, when executed by processing system 796, direct processing system 796 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 795 may include additional processes, programs, or components, such as operating system software, virtualization software, or other application software. Software 795 may also comprise firmware or some other form of machinereadable processing instructions executable by processing system 796.

In general, software 795 may, when loaded into processing system 796 and executed, transform a suitable apparatus, system, or device (of which computing apparatus 791 is representative) overall from a general-purpose computing system into a special-purpose computing system as described herein. Indeed, encoding software 795 on storage system 793 may transform the physical structure of storage system 793. The specific transformation of the physical structure may depend on various factors in different implementations of this description. Examples of such factors may include, but are not limited to, the technology used to implement the storage media of storage system 793 and whether the computer-storage media are provisioned/provided as primary or secondary storage, as well as other factors.

For example, if the computer-readable storage medium is implemented as semiconductor-based memory, software 795 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 797 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between the computing apparatus 791 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specificallyconfigured hardware, such as field-programmable gate array (FPGA) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more computer-readable media, which may comprise processor-executable instructions that, when executed by the processor, can cause the processor to perform methods according to this disclosure as carried out, or assisted, by a processor. Computer-readable media may include computer-readable storage media and/or computer-readable transmission media. Computer-readable storage media, which may be refered to as non-transitory computer-readable media, may include, but are not limited to, an electronic, optical, magnetic, or other storage device capable of providing a processor, such as the processor in a web server, with processor-executable instructions. Other examples of computer-readable storage media include, but are not limited to, a floppy disk, CD-ROM, magnetic disk, memory chip, ROM, RAM, ASIC, configured processor, all optical media, all magnetic tape or other magnetic media, or any other medium from which a computer processor can read. Computer-readable transmission media may include carrier waves, transmission signals or the like. A computer-readable transmission medium may convey instructions between components of a single computer system and/or between plural separate computer systems. The processor, and the processing, described may be in one or more structures, and may be dispersed through one or more structures. The processor may comprise code to carry out methods (or parts of methods) according to this disclosure.

As will be appreciated by one skilled in the art, aspects of the presently taught approaches may be embodied as a system, method, computer program product, and other configurable systems. Accordingly, aspects of the presently taught approaches may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the presently taught approaches may take the form of a computer program product embodied in one or more memory devices or computer readable medium(s) having computer readable program code embodied thereon.

The foregoing examples and descriptions are described herein in the context of systems and methods for providing an access token engine or one or more of its related functions. Those of ordinary skill in the art will realize that these descriptions are illustrative only and are not intended to be in any way limiting. Reference is made in detail to implementations of examples as illustrated in the accompanying drawings. The same reference indicators are used throughout the drawings and the description to refer to the same or like items.

In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. That is, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in an embodiment," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all the following interpretations of the word: any of the items in the list, all the items in the list, and any combination of the items in the list.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

Therefore, from one perspective, there have been described systems and methods for providing an access token engine for dynamically generating access tokens for visiting consumers within a 5G network. In an example, an access token engine, which may be part of a first network, may receive a service request from a visitor consumer network function (NF) that is part of a second network. The access token engine may determine that the service request lacks an access token for receiving services from the first network and retrieve an access token for the visitor consumer NF based on the service request. The access token engine may then generate an updated service request including the service request and the access token. The updated service request may be transmitted to a producer NF within the first network for furnishing the service request for the visitor consumer NF based on the access token.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Example 1 is a computing apparatus comprising: a computer-readable storage medium; processor-executable instructions stored on the computer-readable storage medium; and one or more processors coupled to the computer-readable storage medium and configured to execute the processor-executable instructions to operate a first network function (NF) within a first network, wherein the first NF function comprises an access token engine, such that the processor-executable instructions, when executed by the one or more processors, direct the computing apparatus, to at least: receive a service request from a visitor consumer NF, wherein the visitor consumer NF is in a second network that is different from the first network; determine that the service request lacks an access token for receiving services from the first network; determine an access token for the visitor consumer NF based on the service request; generate an updated service request comprising the service request and the access token; and transmit the updated service request to a producer NF within the first network, wherein the producer NF furnishes the service request for the visitor consumer NF based on the access token.

Example 2 is the computing apparatus of any previous or subsequent Example, wherein the processor-executable instructions to determine the access token for the visitor consumer NF based on the service request, when executed by the one or more processors, further direct the computing apparatus to: generate an access token request based on the service request, wherein the access token request comprises one or more attributes associated with the visitor consumer NF and the service request; transmit the access token request to a second NF within the first network, wherein the second NF generates the access token responsive to receiving the access token request.

Example 3 is the computing apparatus of any previous or subsequent Example, wherein the processor-executable instructions to determine the access token for the visitor consumer NF based on the service request, when executed by the one or more processors, further direct the computing apparatus to: determine a unique identifier for the visitor consumer NF based on the service request; perform a look-up on a visitor access token table based on the unique identifier; and determine the access token for the visitor consumer NF within the visitor access token table, wherein the access token was previously generated by a second NF function within the first network for the visitor consumer NF.

Example 4 is the computing apparatus of any previous or subsequent Example, wherein the processor-executable instructions to determine that the service request lacks the access token for receiving services from the first network, when executed by the one or more processors, further direct the computing apparatus to: identify a current access token for the visitor consumer NF within a visitor access token table; and determine that an expiry time associated with the current access token is exceeded.

Example 5 is the computing apparatus of any previous or subsequent Example, wherein the processor-executable instructions, when executed by the one or more processors, further direct the computing apparatus to: determine a unique identifier for the visitor consumer NF based on the service request; determine an expiry time associated with the access token; and update a visitor access token table with the access token, the expiry time, and the unique identifier, wherein the access token is associated with the unique identifier of the visitor consumer NF and the expiry time within the visitor access token table.

Example 6 is the computing apparatus of any previous or subsequent Example, wherein the first NF comprises a Security Edge Protection Proxy (SEPP) within the first network.

Example 7 is the computing apparatus of any previous or subsequent Example, wherein the processor-executable instructions to determine the access token for the visitor consumer NF based on the service request, when executed by the one or more processors, further direct the computing apparatus to: determine one or more access token attributes based on the service request; generate an access token request comprising the one or more access token attributes; and retrieve the access token from a second NF within the first network using the access token request, wherein the second NF generates the access token responsive to receiving the access token request.

Example 8 is a method comprising: determining, by a first network function (NF), a service request from a visitor consumer NF, wherein the first NF is in a first network and the visitor consumer NF is in a second network; determining, by an access token engine of the first NF, that the service request lacks an access token for receiving services from the first network; determining, by the access token engine, an access token for the visitor consumer NF based on the service request; generating, by the access token engine, an updated service request comprising the service request and the access token; and transmitting, by the first NF, the updated service request to a producer NF within the first network, wherein the producer NF furnishes the service request for the visitor consumer NF based on the access token.

Example 9 is the method of any previous or subsequent Example, wherein determining, by the access token engine, the access token for the service request comprises: generating, by the access token engine, an access token request based on the service request; transmitting, by the access token engine, the access token request to a second NF within the first network, wherein the second NF generates the access token responsive to receiving the access token request; and receiving, by the access token engine, the access token from the second NF.

Example 10 is the method of any previous or subsequent Example, wherein: determining, by the access token engine, that the service request lacks the access token for receiving services from the first network comprises: identifying, by the access token engine, a current access token for the visitor consumer NF within a visitor access token table; and determining, by the access token engine, that the current access token is invalid based on an expiry time associated with the current access token; and determining, by the access token engine, the access token for the visitor consumer NF based on the service request comprises: retrieving, by the access token engine, the access token for the visitor consumer NF from a second NF within the first network.

Example 11 is the method of any previous or subsequent Example, wherein determining, by the access token engine, the access token for the visitor consumer NF based on the service request comprises: performing, by the access token engine, a look-up on a visitor access token table based on the service request; and identifying, by the access token engine, the access token for the visitor consumer NF within the visitor access token table, wherein the access token was previously generated by a second NF function within the first network for the visitor consumer NF.

Example 12 is the method of any previous or subsequent Example, wherein determining, by the access token engine, the access token for the visitor consumer NF based on the service request comprises: identifying, by the access token engine, a current access token for the visitor consumer NF within a visitor access token table; generating, by the access token engine, a first updated service request comprising the current access token and the service request; receiving, by the access token engine, an error response from the producer NF responsive to transmitting the first updated service request to the producer NF; and retrieving, by the access token engine, the access token from a second NF within the first network based on the service request.

Example 13 is the method of any previous or subsequent Example, wherein the method further comprises: determining, by the access token engine, a unique identifier for the visitor consumer NF based on the service request; and updating, by the access token engine, a visitor access token table with the access token and the unique identifier, wherein the access token is associated with the unique identifier of the visitor consumer NF.

Example 14 is the method of any previous or subsequent Example, wherein the access token comprises an open authorization token.

Example 15 is the method of any previous or subsequent Example, wherein the first NF comprises a Security Edge Protection Proxy (SEPP) within the first network.

Example 16 is a computer-readable storage medium comprising processor-executable instructions, wherein the processor-executable instructions, in part, operate a first network function (NF) within a first network such to cause one or more processors to: receive a service request from a visitor consumer NF, wherein the first NF is in a first network and the visitor consumer NF is in a second network; determine, by an access token engine of the first NF, that the service request lacks an access token for receiving services from the first network; determine, by the access token engine, an access token for the visitor consumer NF based on the service request; generate, by the access token engine, an updated service request comprising the service request and the access token; and transmit, by the first NF, the updated service request to a producer NF within the first network, wherein the producer NF furnishes the service request for the visitor consumer NF based on the access token.

Example 17 is the computer-readable storage medium of any previous or subsequent Example, wherein the processor-executable instructions to determine, by the access token engine, the access token for the visitor consumer NF cause the one or more processors to further execute processor-executable instructions stored in the computer-readable storage medium to: generate, by the access token engine, an access token request based on the service request, wherein the access token request comprises one or more of: nfinstanceID; nftype; targetnftype; scope of service; or requestorPLMN; and retrieve, by the access token engine, the access token from a second NF within the first network using the access token request, wherein the second NF generates the access token responsive to receiving the access token request.

Example 18 is the computer-readable storage medium of any previous or subsequent Example, wherein the processor-executable instructions to determine, by the access token engine, the access token for the visitor consumer NF cause the one or more processors to further execute processor-executable instructions stored in the computer-readable storage medium to: perform, by the access token engine, a look-up on a visitor access token table based on the service request; identify, by the access token engine, the access token for the visitor consumer NF within the visitor access token table, wherein the access token was previously generated by a second NF function within the first network for the visitor consumer NF; and determine, by the access token engine, that the access token is valid based on a respective expiry time of the access token.

Example 19 is the computer-readable storage medium of any previous or subsequent Example, wherein the processor-executable instructions cause the one or more processors to further execute processor-executable instructions stored in the computer-readable storage medium to: determine, by the access token engine, an expiry time for the access token; associate, by the access token engine, the access token with a unique identifier for the visitor consumer NF; and store, by the access token engine, the access token, the expiry time, and the unique identifier in a visitor access token table.

Example 20 is the computer-readable storage medium of any previous or subsequent Example, wherein the processor-executable instructions to determine, by the access token engine, the access token for the visitor consumer NF cause the one or more processors to further execute processor-executable instructions stored in the computer-readable storage medium to: retrieve, by the access token engine, the access token from a second NF within the first network using an access token request, wherein the second NF: comprises a network function repository function (NRF) within the first network; and generates the access token responsive to receiving the access token request.

## Claims

1. A computing apparatus comprising:
a computer-readable storage medium;
processor-executable instructions stored on the computer-readable storage medium; and
one or more processors coupled to the computer-readable storage medium and configured to execute the processor-executable instructions to operate a first network function (NF) within a first network, wherein the first NF function comprises an access token engine, such that the processor-executable instructions, when executed by the one or more processors, direct the computing apparatus, to at least:
receive a service request from a visitor consumer NF, wherein the visitor consumer NF is in a second network that is different from the first network;
determine that the service request lacks an access token for receiving services from the first network;
determine an access token for the visitor consumer NF based on the service request;
generate an updated service request comprising the service request and the access token; and
transmit the updated service request to a producer NF within the first network,
wherein the producer NF furnishes the service request for the visitor consumer NF based on the access token.

2. The computing apparatus of claim 1, wherein the processor-executable instructions to determine the access token for the visitor consumer NF based on the service request, when executed by the one or more processors, further direct the computing apparatus to:
generate an access token request based on the service request, wherein the access token request comprises one or more attributes associated with the visitor consumer NF and the service request, and for example wherein the attributes comprise one or more of nfinstanceID, nftype, targetnftype, scope of service, and requestorPLMN; and
transmit the access token request to a second NF within the first network, wherein the second NF generates the access token responsive to receiving the access token request.

3. The computing apparatus of claim 1 or 2, wherein the processor-executable instructions to determine the access token for the visitor consumer NF based on the service request, when executed by the one or more processors, further direct the computing apparatus to:
generate an access token request based on the service request;
transmit, by the access token engine, the access token request to a second NF within the first network, wherein the second NF generates the access token responsive to receiving the access token request; and
receive, by the access token engine, the access token from the second NF..

4. The computing apparatus of any preceding claim, wherein the processor-executable instructions to determine the access token for the visitor consumer NF based on the service request, when executed by the one or more processors, further direct the computing apparatus to:
determine a unique identifier for the visitor consumer NF based on the service request;
perform a look-up on a visitor access token table based on the unique identifier; and
determine the access token for the visitor consumer NF within the visitor access token table, wherein the access token was previously generated by a second NF function within the first network for the visitor consumer NF.

5. The computing apparatus of any preceding claim, wherein the processor-executable instructions to determine the access token for the visitor consumer NF based on the service request, when executed by the one or more processors, further direct the computing apparatus to:
perform a look-up on a visitor access token table based on the service request; and
identify the access token for the visitor consumer NF within the visitor access token table, wherein the access token was previously generated by a second NF function within the first network for the visitor consumer NF.

6. The computing apparatus of claim 5, wherein the processor-executable instructions to determine the access token for the visitor consumer NF based on the service request, when executed by the one or more processors, further direct the computing apparatus to:
determine, by the access token engine, that the access token is valid based on a respective expiry time of the access token.

7. The computing apparatus of any preceding claim, wherein the processor-executable instructions to determine the access token for the visitor consumer NF based on the service request, when executed by the one or more processors, further direct the computing apparatus to:
determine a unique identifier for the visitor consumer NF based on the service request; and
update a visitor access token table with the access token and the unique identifier, wherein the access token is associated with the unique identifier of the visitor consumer NF.

8. The computing apparatus of any preceding claim, wherein the processor-executable instructions to determine the access token for the visitor consumer NF based on the service request, when executed by the one or more processors, further direct the computing apparatus to:
identify a current access token for the visitor consumer NF within a visitor access token table;
generate a first updated service request comprising the current access token and the service request;
receive an error response from the producer NF responsive to transmitting the first updated service request to the producer NF; and
retrieve the access token from a second NF within the first network based on the service request.

9. The computing apparatus of any preceding claim, wherein the processor-executable instructions to determine that the service request lacks the access token for receiving services from the first network, when executed by the one or more processors, further direct the computing apparatus to:
identify a current access token for the visitor consumer NF within a visitor access token table; and
determine that an expiry time associated with the current access token is exceeded.

10. The computing apparatus of claim 9, wherein the processor-executable instructions to determine the access token for the visitor NF, when executed by the one or more processors, further direct the computing apparatus to:
retrieve the access token for the visitor consumer NF from a second NF within the first network., wherein for example the second NF comprises a network function repository function (NRF) within the first network, and generates the access token responsive to receiving the access token request.

11. The computing apparatus of any preceding claim, wherein the processor-executable instructions, when executed by the one or more processors, further direct the computing apparatus to:
determine a unique identifier for the visitor consumer NF based on the service request;
determine an expiry time associated with the access token; and
update a visitor access token table with the access token, the expiry time, and the unique identifier, wherein the access token is associated with the unique identifier of the visitor consumer NF and the expiry time within the visitor access token table.

12. The computing apparatus of any preceding claim, wherein the first NF comprises a Security Edge Protection Proxy (SEPP) within the first network.

13. The computing apparatus of any preceding claim, wherein the processor-executable instructions to determine the access token for the visitor consumer NF based on the service request, when executed by the one or more processors, further direct the computing apparatus to:
determine one or more access token attributes based on the service request;
generate an access token request comprising the one or more access token attributes; and
retrieve the access token from a second NF within the first network using the access token request, wherein the second NF generates the access token responsive to receiving the access token request.

14. A method for a computer system, the method comprising steps corresponding to the functionality of any of claims 1 to 13.

15. A computer-readable medium comprising processor-executable instructions which when executed by one or more processors, cause one or more processors to carry out the method of claim 14.
